# EUROPÄISCHE PATENTSCHRIFT

(11) **EP 2 920 865 B1**
(45) Veröffentlichungstag und Bekanntmachung des Hinweises auf die Patenterteilung: **26.02.2020**
(21) Anmeldenummer: 13779856.7
(22) Anmeldetag: 22.10.2013
(51) Int. Cl.: H02K 3/38

(54) **STATOR FÜR EINE ELEKTRISCHE MASCHINE UND VERFAHREN ZUR HERSTELLUNG DES STATORS**
STATOR FOR AN ELECTRIC MOTOR AND METHOD FOR PRODUCING THE STATOR
STATOR POUR UN MOTEUR ÉLECTRIQUE ET PROCÉDÉ DE PRODUCTION DU STATOR

(30) Priorität: 15.11.2012 DE 102012220855
(43) Veröffentlichungstag der Anmeldung: 23.09.2015
(73) Patentinhaber: Bayerische Motoren Werke Aktiengesellschaft, 80809 München (DE)
(72) Erfinder: MENAUER, Thomas, 84034 Landshut (DE); ZAIDAN, Sherif, 80807 München (DE)
(86) Internationale Anmeldenummer: PCT/EP2013/072054
(87) Internationale Veröffentlichungsnummer: WO 2014/075877

(56) Entgegenhaltungen:
- DE-A1-102005 002 364
- GB-A- 2 023 460
- GB-A- 2 288 920
- US-A1- 2007 096 587
- US-A1- 2012 274 156

## Beschreibung

Vorliegende Erfindung betrifft einen Stator für eine elektrische Maschine sowie ein Verfahren zur Herstellung des Stators. Der Stator wird insbesondere für eine elektrische Maschine in einem Kraftfahrzeug verwendet. Die elektrische Maschine dient vorzugsweise zum Antrieb des Kraftfahrzeugs.

Zentrale Komponenten einer elektrischen Maschine sind der Stator und der Rotor. In den Stator werden Spulen eingebracht, um ein sich drehendes elektromagnetisches Feld zu erzeugen, das den Rotor antreibt. Für eine einwandfreie Funktionsweise müssen die Spulen im Stator voneinander elektrisch isoliert werden. Im Stand der Technik werden hierzu Isolationspapiere, beispielsweise NOMEX-Papierfahnen, verwendet. Die Isolationspapiere müssen von Hand zwischen die Spulen eingelegt werden. Insbesondere an den Spulenköpfen ist dieser Prozess neben der körperlichen Anstrengung sehr zeitintensiv. Zusätzlich ergeben sich durch das mögliche Verrutschen der Isolationspapiere bei darauf folgenden Arbeitsschritten erhebliche Qualitätsprobleme, die eine ständige Kontrolle erfordern und einen vollautomatischen Fertigungsprozess nicht ermöglichen.

Der Stand der Technik ist: GB2023460A, DE102005002364A1, GB2288920A und US2012/274156A1.

Es ist Aufgabe vorliegender Erfindung, ein Verfahren zur Herstellung eines Stators für eine elektrische Maschine anzugeben, das bei einfacher und prozesssicherer Durchführung eine betriebssichere Isolation der Spulenköpfe ermöglicht. Des Weiteren ist es Aufgabe vorliegender Erfindung, einen Stator für eine elektrische Maschine anzugeben, der bei kostengünstiger Herstellung und Montage eine betriebssichere Isolation der Spulenköpfe aufweist.

Die Lösung der Aufgabe erfolgt durch die Merkmale der unabhängigen Ansprüche. Die Unteransprüche haben jeweils vorteilhafte Ausgestaltungen der Erfindung zum Gegenstand.

Der besondere Vorteil des verwendeten Formkörpers liegt in der schnellen Montage. Anstatt wie bisher Isolationspapier mühsam nach dem Einzug aller Spulen per Hand zwischen diese einzulegen, wird der Formkörper von einer Vorrichtung oder manuell nach dem Einzug der ersten Spulen eingelegt. Des Weiteren erhöht sich dadurch die Qualität, da der Formkörper eine sichere Isolation zwischen den Spulenköpfen ermöglicht. Eine vollautomatische Produktion ist somit ohne Qualitätseinbußen möglich.

Weitere Einzelheiten, Merkmale und Vorteile der Erfindung ergeben sich aus der nachfolgenden Beschreibung und den Figuren. Dabei zeigen:
- Figur 1: eine Draufsicht auf einen erfindungsgemäßen Stator gemäß einem Ausführungsbeispiel,
- Figur 2: eine Detailansicht des erfindungsgemäßen Stators gemäß dem Ausführungsbeispiel,
- Figur 3: einen Formkörper des erfindungsgemäßen Stators gemäß dem Ausführungsbeispiel,
- Figur 4: eine erste Variante zum Herstellungsverfahren des erfindungsgemäßen Stators gemäß dem Ausführungsbeispiel, und
- Figur 5: eine zweite Variante zum Herstellungsverfahren des erfindungsgemäßen Stators gemäß dem Ausführungsbeispiel.

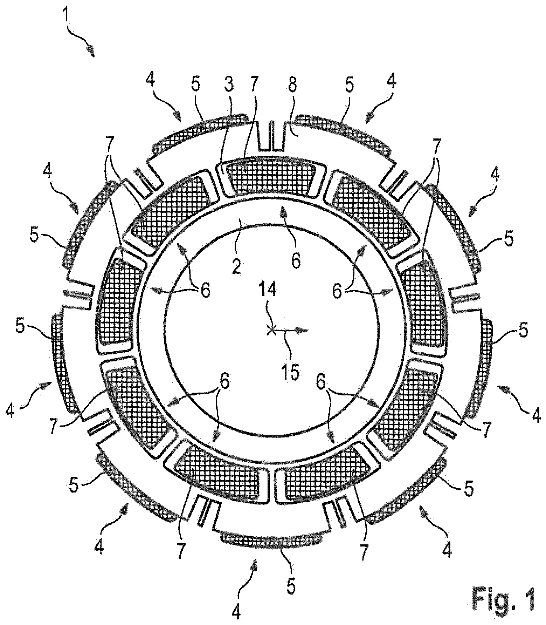

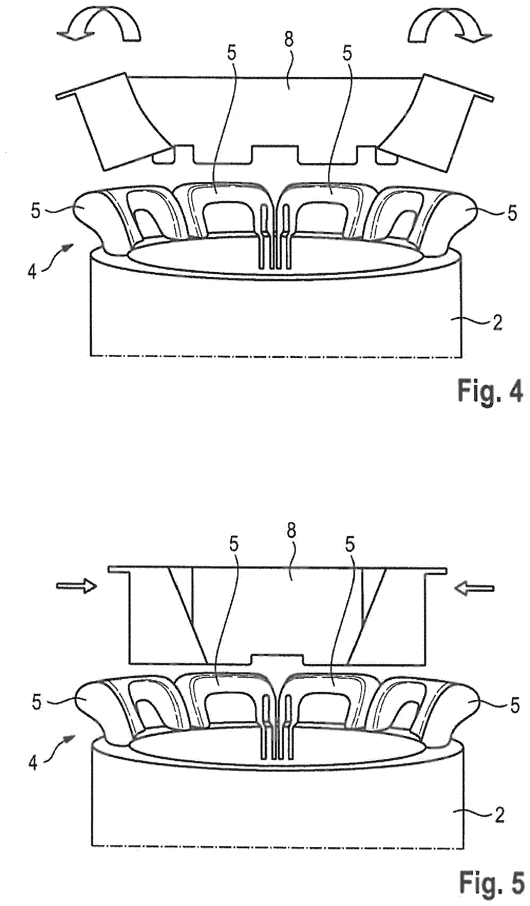

Nachfolgend wir anhand der Figuren 1 bis 3 ein Stator 1 gemäß einem Ausführungsbeispiel beschrieben. Figuren 4 und 5 zeigen zwei Varianten zum Herstellungsverfahren.

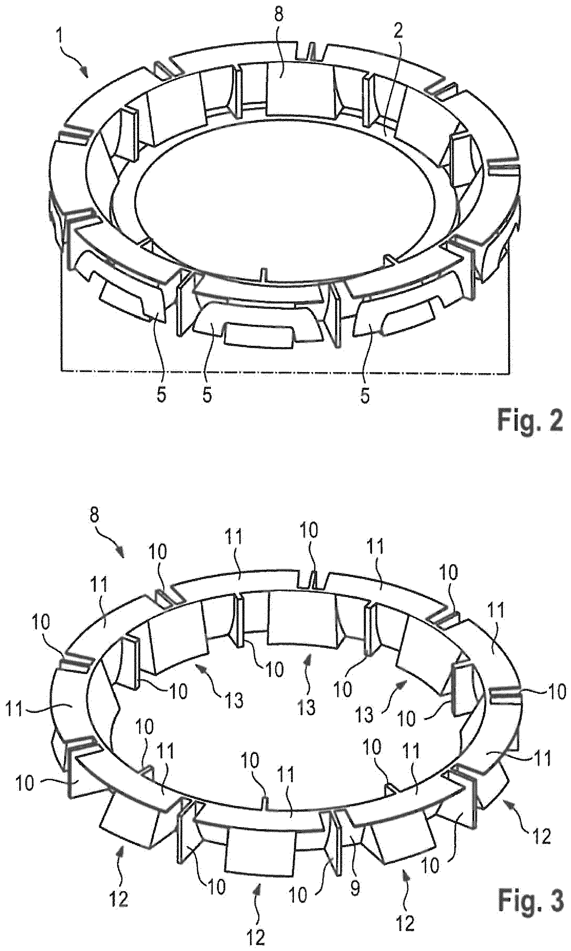

Gemäß den Figuren 1 und 2 weist der Stator 1 einen zylindrischen Statorkörper 2 aus Metall auf. Entsprechend der zylindrischen Ausbildung des Statorkörpers 2 ist eine Axialrichtung 14 definiert. Die Axialrichtung 14 entspricht der Position einer Rotorwelle. Senkrecht zur Axialrichtung 14 erstreckt sich eine Radialrichtung 15.

Der Statorkörper 2 weist mehrere Statornuten 3 auf. In die Statornuten 3 sind mehrere erste Spulen 4 und mehrere zweite Spulen 6 eingesetzt. Im gezeigten Ausführungsbeispiel sind jeweils neun erste Spulen 4 und neun zweite Spulen 6 in den Statorkörper 2 eingezogen.

An jeder Stirnseite des Statorkörpers 2 sind neun erste Spulenköpfe 5 und neun zweite Spulenköpfe 7 ausgebildet. Auf die Stirnseite des Statorkörpers 2 ist ein Formkörper 8 aus spritzgegossenem Kunststoff eingesetzt. Der Formkörper 8 trennt die einzelnen Spulenköpfe 5, 7 voneinander. Die Figuren 1 und 2 zeigen lediglich eine Stirnseite des Statorkörpers 2. Tatsächlich wird der Formkörper 8 bevorzugt an beiden Stirnseiten verwendet. Die Darstellung von jeweils neun Spulenköpfen soll keine einschränkende Wirkung haben. Das erfindungsgemäße Verfahren bzw. der erfindungsgemäße Formkörper sind auch bei einer anderen Anzahl von Spulenköpfen einsetzbar.

Im Verfahren zur Herstellung des Stators 1 werden zunächst die ersten Spulen 2 in die Statornuten 3 eingezogen. Daraufhin erfolgt das Aufsetzen des Formkörpers 8 und somit das Einsetzen der ersten Spulenköpfe 5 in den Formkörper 8. Daran anschließend erfolgt das Einziehen der zweiten Spulen 6 und das Einsetzen der zweiten Spulenköpfe 7 in den Formkörper 8. Figur 2 zeigt hierzu einen Zwischenschritt, in dem bereits die ersten Spulen 4 eingezogen sind und der Formkörper 8 montiert ist.

Figur 3 zeigt im Detail den Formkörper 8. Im gezeigten Ausführungsbeispiel wird pro Stirnseite des Statorkörpers 2 ein einstückiger Formkörper 8 verwendet. Dementsprechend ist der Formkörper 8 ringförmig ausgestaltet. Der Formkörper 8 weist eine Trennwand 9 auf. Diese Trennwand 9 erstreckt sich entlang des gesamten Umfangs des Statorkörpers 2. Die Trennwand 9 trennt alle ersten Spulenköpfe 5 von allen zweiten Spulenköpfen 7. Die Trennwand 9 erstreckt sich in Axialrichtung 14 und ist somit koaxial zur zylindrischen Form des Statorkörpers 2 angeordnet.

Von der Trennwand 9 erstrecken sich mehrere Zwischenwände 10. Zwischenwände 10 stehen insbesondere senkrecht auf der Trennwand 9. Die Zwischenwände 10 erstrecken sich auf der Innenseite und auf der Außenseite der Trennwand 9 in Radialrichtung 15.

Auf der Außenseite der Trennwand 9 dienen die Zwischenwände 10 jeweils zur Trennung zwischen zwei benachbarten ersten Spulenköpfen 5. Auf der Innenseite dienen die Zwischenwände 10 jeweils zur Trennung von zwei benachbarten zweiten Spulenköpfen 7.

Auf der Außenseite der Trennwand sind neun erste Aufnahmen 12 ausgebildet. Die ersten Aufnahmen 12 befinden sich jeweils zwischen zwei Zwischenwänden 10. In diese Aufnahmen 12 werden die ersten Spulköpfe 5 eingesetzt. An der Innenseite der Trennwand 9 befinden sich neun zweite Aufnahmen 13. Die zweiten Aufnahmen 13 befinden sich ebenfalls jeweils zwischen zwei Zwischenwänden 10. In die zweiten Aufnahmen 13 werden die zweiten Spulenköpfe 7 eingesetzt.

Die ersten und zweiten Aufnahmen 12, 13 sind jeweils als Fortsätze ausgebildet, die sich in Radialrichtung 15 von der Trennwand 9 weg erstrecken.

Zur Abdeckung und Isolation der Spulenköpfe 5, 7 sind an dem Formkörper 8 Abdeckwände 11 ausgebildet. Die Abdeckwände 11 stehen senkrecht auf der Trennwand 9 und senkrecht zu den Zwischenwänden 10. Insbesondere ist pro erste Aufnahme 12 eine Abdeckwand 11 vorgesehen.

Figuren 4 und 5 zeigen zwei verschiedene Varianten zur Herstellung des Stators 1. Gemäß Figuren 4 und 5 ist der Formkörper 8 einstückig, ringförmig und geschlossen.

Durch eine gewisse Flexibilität des Formkörpers 8 in Fig. 4, kann dieser nach innen geklappt werden, sodass es möglich ist, den Formkörper 8 von innen an die ersten Spulenköpfe 5 anzulegen. Nach dem Anlegen des Formkörpers 8 wird der Formkörper 8 nach außen geklappt, sodass die ersten Spulenköpfe 5 in die ersten Aufnahmen 12 eingesetzt werden.

Der Formkörper 8 in Fig. 5 wird zur Montage deformiert, sodass der Durchmesser des Formkörpers 8 reduziert wird. Auch in der Variante gemäß Figur 5 wird der Formkörper 8 von innen an die ersten Spulenköpfen 5 angelegt, sodass die ersten Spulenköpfe 5 in die ersten Aufnahmen 12 eingefügt werden.

Wie in den Fig. 4 und 5 angedeutet, besteht bevorzugt jede Spule 4, 6 aus zwei in Reihe geschalteten Einzelspulen. Für jede Einzelspule ist eine eigene Statornut 3 vorgesehen. Im gezeigten Ausführungsbeispiel gibt es somit für jede Spule 4, 6 vier Statornuten 3.

### Bezugszeichenliste:

- 1: Stator
- 2: Statorkörper
- 3: Statornuten
- 4: erste Spulen
- 5: erste Spulenköpfe
- 6: zweite Spulen
- 7: zweite Spulenköpfe
- 8: Formkörper
- 9: Trennwand
- 10: Zwischenwände
- 11: Abdeckwände
- 12: erste Aufnahmen
- 13: zweite Aufnahmen
- 14: Axialrichtung
- 15: Radialrichtung

## Patentansprüche

1. Verfahren zur Herstellung eines Stators (1) für eine elektrische Maschine, umfassend die folgenden Schritte in gegebener Reihenfolge:
- Bereitstellen eines zylindrischen Statorkörpers (2) mit mehreren Statornuten (3),
- Einziehen zumindest einer ersten, außerhalb des Statorkörpers (2) gewickelten Spule (4) in die Statornuten (3), wobei die erste Spule (4) an zumindest einer Stirnseite des Statorkörpers (2) einen ersten Spulenkopf (5) aufweist,
**gekennzeichnet durch**
- Aufsetzen zumindest eines einstückig ringförmig ausgestalteten Formkörpers (8) auf den Statorkörper (2), wobei der Formkörper (8) eine Trennwand (9) und mehrere sich von der Trennwand (9) erstreckende Zwischenwände (10) aufweist, wobei auf der Außenseite der Trennwand (9) neun erste Aufnahmen (12) ausgebildet sind, die sich jeweils zwischen zwei Zwischenwänden (10) befinden, und
- Einsetzen des ersten Spulenkopfs (5) in eine erste Aufnahme (12) des zumindest einen Formkörpers (8) zur elektrischen Isolation des ersten Spulenkopfs (5).

2. Verfahren nach Anspruch 1, **dadurch gekennzeichnet, dass** mehrere erste Spulen (4) in die Statornuten (3) eingebracht werden, und anschließend die ersten Spulenköpfe (5) in die ersten Aufnahmen (12) des zumindest einen Formkörpers (8) eingesetzt werden.

3. Verfahren nach einem der vorhergehenden Ansprüche, **dadurch gekennzeichnet, dass** nach dem Einsetzen der ersten Spulenköpfe (5) in die ersten Aufnahmen (12) des zumindest einen Formkörpers (8) zweite Spulen (6) in die Statornuten (3) eingebracht werden, wobei die zweiten Spulen (6) zweite Spulenköpfe (7) aufweisen, und wobei die zweiten Spulenköpfe (7) in den Formkörper (8) eingesetzt werden, wobei hierfür der Formkörper (8) an der Innenseite der Trennwand (9) neun zweite Aufnahmen (13) vorsieht, wobei sich diese zweite Aufnahmen (13) ebenfalls jeweils zwischen zwei Zwischenwänden (10) befinden.

4. Verfahren nach Anspruch 3, **dadurch gekennzeichnet, dass** die zweiten Spulen (6) im zylindrischen Statorkörper (2) innerhalb der ersten Spulen (4) angeordnet sind.

5. Verfahren nach einem der Ansprüche 3 oder 4, **dadurch gekennzeichnet, dass** erste Spulenköpfe (5) und zweite Spulenköpfe (7) in denselben Formkörper (8) eingesetzt werden.

6. Verfahren nach einem der vorhergehenden Ansprüche, **dadurch gekennzeichnet, dass** auch die zweiten Spulen (6) außerhalb des Statorkörpers (2) gewickelt und anschließend in die Statornuten (3) eingezogen werden.

7. Verfahren nach einem der vorhergehenden Ansprüche, **dadurch gekennzeichnet, dass** die Spulenköpfe (5,7) zusammen mit dem Formkörper (8) gepresst, vorzugsweise verdichtet, werden.

8. Verfahren nach einem der vorhergehenden Ansprüche, **dadurch gekennzeichnet, dass** ein Formkörper (8) aus spritzgegossenem Kunststoff verwendet wird.

9. Stator (1) für eine elektrische Maschine, hergestellt nach einem Verfahren gemäß einem der Ansprüche 1 bis 8, umfassend
- einen zylindrischen Statorkörper (2) mit mehreren Statornuten (3),
- zumindest eine in die Statornuten (3) eingesetzte erste Spule (4), wobei die erste Spule (4) an zumindest einer Stirnseite des Statorkörpers (2) einen ersten Spulenkopf (5) aufweist,
- zumindest eine in die Statornuten (3) eingesetzte zweite Spulen (6), wobei die zweite Spule (6) an der zumindest einen Stirnseite des Statorkörpers (2) einen zweiten Spulenkopf (7) aufweist, und wobei die zweite Spule (6) im zylindrischen Statorkörper (2) innerhalb der ersten Spule (4) angeordnet ist, und
- zumindest einen Formkörper (8) zur elektrischen Isolation der Spulenköpfe (5,7), wobei der Formkörper (8) eine Trennwand (9) umfasst, und wobei die Trennwand (9) zwischen dem ersten Spulenkopf (5) und dem zweiten Spulenkopf (7) angeordnet ist.

10. Stator nach Anspruch 9, **dadurch gekennzeichnet, dass** die Trennwand (9) die Spulenköpfe (5,7) vollständig abdeckt.

11. Stator nach einem der Ansprüche 9 oder 10, **dadurch gekennzeichnet, dass** die Trennwand (9) des zumindest einen Formkörpers (8) zwischen mehreren ersten Spulenköpfen (5) und mehreren zweiten Spulenköpfen (7) angeordnet ist.

12. Stator nach einem der Ansprüche 9 bis 11, **dadurch gekennzeichnet, dass** das Formteil (8) zumindest eine Zwischenwand (10) aufweist, wobei die Zwischenwand (10) zwischen zwei benachbarten ersten Spulenköpfen (5) oder zwischen zwei benachbarten zweiten Spulenköpfen (7) angeordnet ist.

13. Formkörper (8) zur elektrischen Isolation von in einem Stator (1) einer elektrischen Maschine angeordneten Spulenköpfen (5, 7), wobei der Formkörper dazu ausgebildet ist, bei einem Verfahren nach einem der Ansprüche 1 bis 8 zum Einsatz zu kommen.

## Claims

1. A method for producing a stator (1) for an electric machine, comprising the following steps in the specified sequence:
- making available a cylindrical stator body (2) with a plurality of stator slots (3),
- drawing at least a first coil (4) which is wound outside the stator body (2) into the stator slots (3), wherein the first coil (4) has a first coil end (5) on at least one end face of the stator body (2),
**characterised by**
- placing at least one moulded body (8) which is configured annularly in one piece on the stator body (2), the moulded body (8) having a partition (9) and a plurality of intermediate walls (10) extending from the partition (9), with nine first receptacles (12) being formed on the outer side of the partition (9) which are located in each case between two intermediate walls (10), and
- inserting the first coil end (5) into a first receptacle (12) of the at least one moulded body (8) for electrically insulating the first coil end (5).

2. A method according to Claim 1, **characterised in that** a plurality of first coils (4) are introduced into the stator slots (3), and then the first coil ends (5) are inserted into the first receptacles (12) of the at least one moulded body (8).

3. A method according to one of the preceding claims, **characterised in that**, once the first coil ends (5) have been inserted into the first receptacles (12) of the at least one moulded body (8), second coils (6) are introduced into the stator slots (3), the second coils (6) having second coil ends (7), and the second coil ends (7) being inserted into the moulded body (8), with for this the moulded body (8) providing nine second receptacles (13) on the inner side of the partition (9), these second receptacles (13) likewise being located in each case between two intermediate walls (10).

4. A method according to Claim 3, **characterised in that** the second coils (6) are arranged in the cylindrical stator body (2) within the first coils (4).

5. A method according to one of Claims 3 or 4, **characterised in that** first coil ends (5) and second coil ends (7) are inserted into the same moulded body (8).

6. A method according to one of the preceding claims, **characterised in that** the second coils (6) too are wound outside the stator body (2) and then drawn into the stator slots (3).

7. A method according to one of the preceding claims, **characterised in that** the coil ends (5, 7) are pressed, preferably compressed, together with the moulded body (8).

8. A method according to one of the preceding claims, **characterised in that** a moulded body (8) made of injection-moulded plastics material is used.

9. A stator (1) for an electric machine, produced by a method according to one of Claims 1 to 8, comprising:
- a cylindrical stator body (2) with a plurality of stator slots (3),
- at least one first coil (4) inserted into the stator slots (3), the first coil (4) having a first coil end (5) on at least one end face of the stator body (2),
- at least one second coil(s) (6) inserted into the stator slots (3), the second coil (6) having a second coil end (7) on the at least one end face of the stator body (2), and the second coil (6) being arranged in the cylindrical stator body (2) within the first coil (4), and
- at least one moulded body (8) for electrically insulating the coil ends (5, 7), the moulded body (8) comprising a partition (9), and the partition (9) being arranged between the first coil end (5) and the second coil end (7).

10. A stator according to Claim 9, **characterised in that** the partition (9) completely covers the coil ends (5, 7).

11. A stator according to one of Claims 9 or 10, **characterised in that** the partition (9) of the at least one moulded body (8) is arranged between a plurality of first coil ends (5) and a plurality of second coil ends (7).

12. A stator according to one of Claims 9 to 11, **characterised in that** the shaped part (8) has at least one partition (10), the partition (10) being arranged between two adjacent first coil ends (5) or between two adjacent second coil ends (7).

13. A moulded body (8) for electrically insulating coil ends (5, 7) arranged in a stator (1) of an electric machine, wherein the moulded body is designed to be used in a method according to one of Claims 1 to 8.

## Revendications

1. Procédé d'obtention d'un stator (1) destiné à une machine électrique comprenant, dans la succession déterminée les étapes suivantes consistant à :
- se procurer un corps de stator cylindrique (2) ayant plusieurs rainures de stator (3),
- insérer dans les rainures du stator (3) au moins une première bobine (4) enroulée à l'extérieur du corps de stator (2), la première bobine (4) comprenant une première tête de bobine (5) situé sur au moins une face frontale du corps de stator (2),
**caractérisé par** des étapes consistant à :
- positionner sur le corps de stator (2) au moins un corps moulé annulaire (8) réalisé en une seule pièce, ce corps moulé (8) ayant une paroi de séparation (9) et plusieurs parois intermédiaires (10) s'étendant à partir de la paroi de séparation (9), sur la face externe de la paroi de séparation (9) étant formés neuf premiers évidements (12) qui sont respectivement situés entre deux parois intermédiaires (10), et
- introduire la première tête de bobine (5) dans un premier évidement (12) du corps moulé (8) pour permettre l'isolation électrique de la première tête de bobine (5).

2. Procédé conforme à la revendication 1,
**caractérisé en ce que**
plusieurs premières bobines (4) sont introduites dans les rainures du stator (3), puis, les premières têtes de bobine (5) sont positionnées dans les premiers évidements (12) du corps moulé (8).

3. Procédé conforme à l'une des revendications précédentes,
**caractérisé en ce qu'**
après l'introduction des premières têtes de bobine (5) dans les premiers évidements (12) du corps moulé (8), des secondes bobines (6) sont introduites dans les rainures du stator (3), les secondes bobines (6) comprenant des secondes têtes de bobine (7), et les secondes têtes de bobine (7) étant introduites dans le corps moulé (8), à cet effet, le corps moulé (8) comprenant, sur la face interne de la paroi de séparation (9) neuf seconds évidements (13), ces seconds évidements (13) étant également respectivement situés entre deux parois intermédiaires (10).

4. Procédé conforme à la revendication 3,
**caractérisé en ce que**
les secondes bobines (6) sont installées dans le corps de stator cylindrique (2) à la partie interne des premières bobines (4).

5. Procédé conforme à l'une des revendications 3 et 4,
**caractérisé en ce que**
des premières têtes de bobine (5) et des secondes têtes de bobine (7) sont introduites dans le même corps moulé (8).

6. Procédé conforme à l'une des revendications précédentes,
**caractérisé en ce que**
les secondes bobines (6) sont également enroulées à l'extérieur du corps de stator (2) puis insérées dans les rainures du stator (3).

7. Procédé conforme à l'une des revendications précédentes,
**caractérisé en ce que**
les têtes de bobine (5, 7) sont comprimées, et de préférence compactées avec le corps moulé (8).

8. Procédé conforme à l'une des revendications précédentes,
**caractérisé en ce que**
l'on utilise un corps moulé (8) en un matériau synthétique moulé par injection.

9. Stator (1) destiné à une machine électrique obtenu par la mise en œuvre d'un procédé conforme à l'une des revendications 1 à 8, comprenant :
- un corps de stator cylindrique (2) ayant plusieurs rainures de stator (3),
- au moins une première bobine (4) introduite dans les rainures du stator (3), la première bobine (4) ayant une première tête de bobine (5) sur au moins une face frontale du corps de stator (2),
- au moins une seconde bobine (6) introduite dans les rainures du stator (3), la seconde bobine (6) ayant une seconde tête de bobine (7) sur la face frontale du corps de stator (2), et la seconde bobine (6) étant positionnée dans le corps de stator cylindrique (2) à la partie interne de la première bobine (4), et
- au moins un corps moulé (8) permettant l'isolation électrique des têtes de bobine (5, 7), le corps moulé (8) comprenant une paroi de séparation (9) et la paroi de séparation (9) étant positionnée entre la première tête de bobine (5) et la seconde tête de bobine (7).

10. Stator conforme à la revendication 9,
**caractérisé en ce que**
la paroi de séparation (9) recouvre totalement les têtes de bobine (5, 7).

11. Stator conforme à l'une des revendications 9 et 10,
**caractérisé en ce que**
la paroi de séparation (9) du corps moulé (8) est positionnée entre plusieurs premières têtes de bobine (5) et plusieurs secondes têtes de bobine (7).

12. Stator conforme à l'une des revendications 9 à 11,
**caractérisé en ce que**
le corps moulé (8) comporte au moins une paroi de séparation (10), cette paroi de séparation (10) étant positionnée entre deux premières têtes de bobine (5) voisines ou entre deux secondes têtes de bobine (7) voisines.

13. Corps moulé (8) permettant l'isolation électrique de têtes de bobine (5, 7) positionnées dans un stator (1) d'une machine électrique, ce corps moulé étant réalisé pour pouvoir être utilisé selon un procédé conforme à l'une des revendications 1 à 8.
